Europäisches Patentamt

European Patent Office

Office européen des brevets

(11) Numéro de publication : **0 037 292**
**B1**

(12) FASCICULE DE BREVET EUROPÉEN

(45) Date de publication du fascicule du brevet :
**11.05.83**

(21) Numéro de dépôt : **81400220.0**

(22) Date de dépôt : **13.02.81**

(51) Int. Cl.³ : **B 23 Q 3/155**

(54) **Magasin d'outils pour dispositif de changement automatique d'outils.**

(30) Priorité : **26.03.80 FR 8006758**

(43) Date de publication de la demande :
**07.10.81 Bulletin 81/40**

(45) Mention de la délivrance du brevet :
**11.05.83 Bulletin 83/19**

(84) Etats contractants désignés :
**DE GB IT**

(56) Documents cités :
**FR A 2 096 604**
**FR A 2 282 971**
**FR A 2 361 971**
**US A 3 281 935**
**US A 3 851 380**

(73) Titulaire : **LINE S.A. Société Anonyme dite
64, rue Hoche
F-80300 Albert (FR)**

(72) Inventeur : **Pinchemaille, Pierre P.
16, Chemin de Corbie
F-80300 Albert (FR)**

(74) Mandataire : **Moulines, Pierre et al
Cabinet BEAU de LOMENIE 55, rue d'Amsterdam
F-75008 Paris (FR)**

Jouve, 18, rue St-Denis, 75001 Paris, France

## Magasin d'outils pour dispositif de changement automatique d'outils

La présente invention a pour objet un magasin d'outils pour dispositif de changement automatique d'outils. Les machines-outils et notamment les fraiseuses comportent dans certains cas un dispositif de changement d'outils automatique qui comprend d'une façon générale deux moyens mécaniques.

a) un dispositif changeur d'outil susceptible d'enlever l'outil monté dans la broche de la fraiseuse et de le remplacer par un autre outil prélevé dans un magasin.

b) un magasin d'outils.

La présente invention concerne le magasin dans lequel sont stockés les outils.

Parmi les différents magasins connus (FR-A-2 282 971, 2 096 604), il existe une forme particulière de magasin qui est représentée aux figures 1 et 2 et qui est constituée d'un disque circulaire 1 monté rotatif sur un axe 2, ce disque 1 comportant à sa périphérie une série de logements 3 espacés recevant les outils 4 dont les axes 5 sont disposés suivant les rayons du disque 1.

Ce magasin est complété par différents dispositifs permettant d'entraîner le disque 1 en rotation, de l'arrêter pour présenter l'outil choisi à la position de changement, de bloquer et débloquer l'outil etc., tous ces dispositifs connus ne faisant pas partie de l'invention.

Le magasin mentionné ci-dessus est relativement simple et bon marché, lorsqu'on le compare notamment à d'autres dispositifs où les différents logements constituent une chaîne sans fin. Par contre, le nombre de logements possible est limité par le diamètre acceptable du disque, en fonction de l'espace disponible.

La présente invention a pour but de remédier à cet inconvénient en conservant les avantages du magasin à disques.

Conformément à la présente invention au moins un disque secondaire est monté rotatif coaxialement au disque principal, sur le disque secondaire sont articulés suivant un axe perpendiculaire à un rayon du disque secondaire des organes de support de logement secondaires destinés à recevoir les outils, lesdits logements secondaires étant susceptibles d'être engagés sélectivement par pivotement dans une ouverture ménagée dans la paroi du disque principal à l'emplacement de l'un des logements normalement prévu sur ledit disque.

Cette disposition a pour avantage principal de permettre la présentation des outils du magasin supérieur et du magasin inférieur suivant la même position pour la pose et la dépose des outils par le bras du dispositif de changement. On parvient ainsi à emmagasiner un nombre d'outils important dans un volume restreint en utilisant un dispositif mécanique relativement simple.

D'autres caractéristiques et avantages de l'invention seront mieux compris à la lecture de la description qui va suivre d'un exemple de réalisation présenté à titre non limitatif et en se référant aux dessins annexés, dans lesquels :

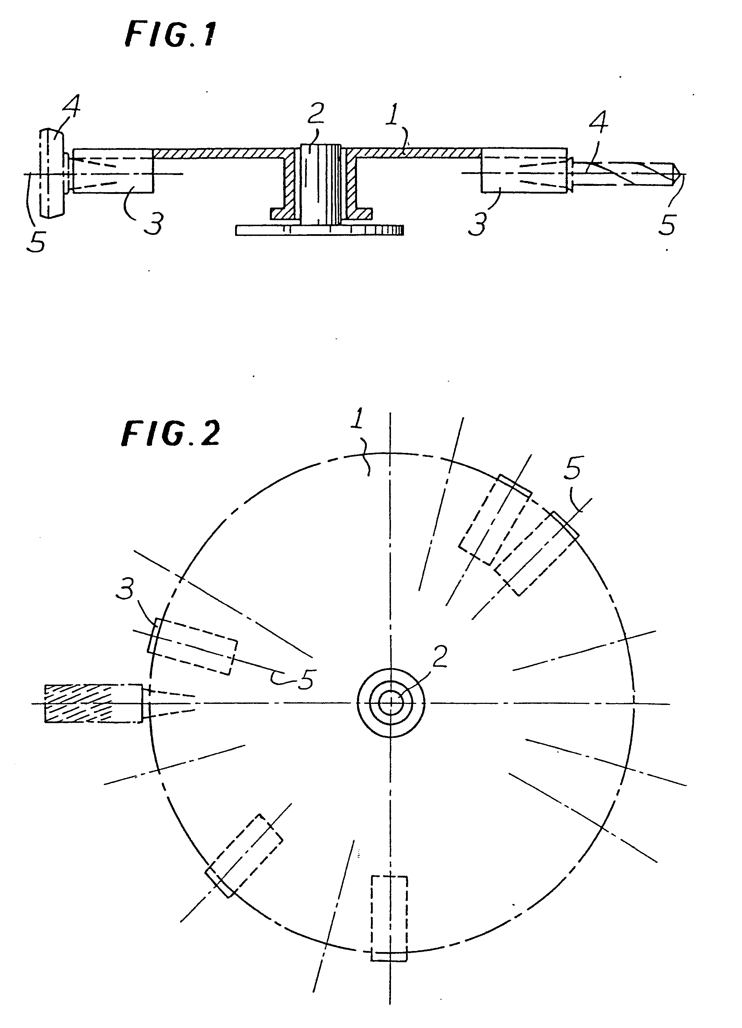

La figure 1 est une vue en élévation et en coupe radiale d'un magasin d'outils de type connu.

La figure 2 est une vue en plan du magasin d'outils connu représenté à la figure 1.

La figure 3 est une vue en élévation et en coupe suivant la ligne III-III de la figure 4 d'un magasin d'outils suivant la présente invention.

La figure 4 est une vue en plan d'un magasin d'outils suivant l'invention.

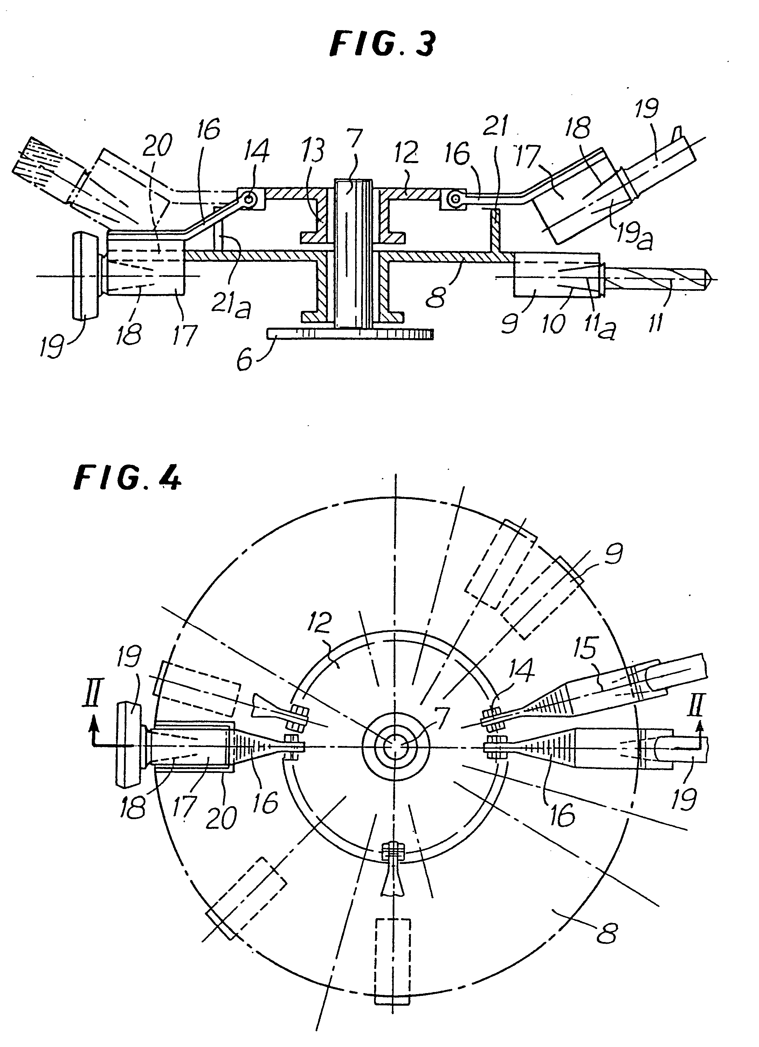

Aux figures 3 et 4 on a représenté un mode de réalisation d'un magasin d'outils suivant l'invention qui comprend une embase 6 sur laquelle est fixé un axe 7 autour duquel est monté rotatif un disque circulaire principal 8, qui comporte à sa périphérie une série de boîtiers 9 présentant des logements 10 dans lesquels sont engagées les queues 11a des outils 11. Au-dessus du disque principal 8 est monté rotatif sur le même axe un disque secondaire 12 qui est séparé du disque 8 par une entretoise 13. Sur le pourtour du disque secondaire 12 sont articulés autour d'axes 14 perpendiculaires aux rayons 15 du disque 12, des tiges coudées de support 16 sur lesquelles sont fixés des boîtiers 17 présentant des logements 18 dans lesquels sont engagées les queues 19a des outils 19.

Sur le disque principal 8 il est prévue une paroi circulaire 21 sur laquelle sont en appui les tiges 16 et qui présente une fente 21a pour le passage de la tige lorsque celle-ci est abaissée en position d'utilisation du logement d'outil.

Dans la paroi du disque principal 8 est ménagée une ouverture 20 qui occupe l'emplacement de l'un des boîtiers 9 normalement prévu sur le disque, ladite ouverture 20 lorsqu'elle se trouve en position de changement d'outil, étant prévue pour recevoir l'un des boîtiers 17 muni d'un outil 19 ainsi qu'il est représenté sur la partie gauche des figures 3 et 4. Les boîtiers 17 porte-outils qui se trouvent en position relevée comme représenté sur la partie droite de la figure 3, sont amenés au-dessus de l'ouverture 20 et pivotent autour de l'axe 14 afin d'être abaissés et engagés dans l'ouverture 20 à la position de changement pour permettre l'extraction ou la mise en place d'un outil dans le magasin supérieur. Si l'on ne provoque pas l'abaissement de la tige de support et du boîtier le magasin inférieur peut fonctionner au moyen des boîtiers 9 comme s'il était seul.

Les disques 8 et 12 sont entraînés en rotation sélectivement par au moins un organe moteur et un moyen de transmission non représentés au dessin.

De même le déplacement vertical des organes de support 16 et des boîtiers 17 est commandé par au moins un organe moteur et un moyen de transmission non représentés au dessin.

## Revendications

1. Magasin d'outils pour dispositif de changement automatique d'outils, comprenant un disque circulaire (8) monté rotatif sur un axe (7) et comportant à sa périphérie des logements (10) destinés à recevoir les outils (11) dont les axes sont disposés suivant les rayons du disque, caractérisé en ce que coaxialement au disque principal (8) est monté rotatif au moins un disque secondaire (12) sur lequel sont articulés suivant un axe (14) perpendiculaire à un rayon du disque secondaire (12) des organes de support (16, 17) d'organes présentant des logements secondaires (18) destinés à recevoir les outils (19), lesdits organes (16, 17) munis de logements secondaires (18) étant susceptibles d'être engagés sélectivement par pivotement dans une ouverture (20) ménagée dans la paroi du disque principal (8) à l'emplacement de l'un des logements normalement prévu sur ledit disque.

2. Magasin d'outils suivant la revendication 1, caractérisé en ce que le disque secondaire (12) est disposé au-dessus du disque principal (8) dont il est séparé par une entretoise (13) engagée sur le même axe.

3. Magasin d'outils suivant la revendication 1, caractérisé en ce que l'ouverture (20) ménagée dans le disque principal (8) afin de recevoir les organes (16, 17) présentant les logements (18) du disque secondaire (12) est susceptible d'être présentée au poste de changement d'outils.

4. Magasin d'outils suivant la revendication 1, caractérisé en ce que sur le disque secondaire (12) sont articulées des tiges (16) coudées qui supportent des boîtiers (17) présentant des logements d'outils (18), lesdites tiges (16) étant en appui contre une paroi circulaire (21) qui présente une fente (21a) pour le passage de la tige (16) lorsque celle-ci est abaissée en position d'utilisation du logement d'outil.

5. Magasin d'outils suivant la revendication 1, caractérisé en ce que les disques principal et secondaire (8 et 12) sont entraînés en rotation sélectivement par au moins un organe moteur.

6. Magasin d'outils suivant la revendication 1, caractérisé en ce que le déplacement vertical des organes de support (16, 17) de logement d'outils est commandé par au moins un organe moteur.

## Claims

1. A tool magazine for automatic tool-changing device, comprising a circular disc (8) mounted for rotation about a pin (7) and provided on its periphery with housings (10) designed to receive the tools (11) whose axes are arranged according to the radii of the disc, characterized in that at least a secondary disc (12) is mounted to rotate co-axially to the main disc (8) on which secondary disc are hingedly mounted, about an axis (14) perpendicular to a radius of the secondary disc (12), members (16, 17) for supporting the secondary housings (18) designed to receive the tools (19), the said members (16, 17) presenting the secondary housings being adapted to be selectively pivotally engaged in an opening (20) provided in the wall of the main disc (18) where one of the housings normally provided on said disc is situated.

2. A tool magazine according to claim 1, characterized in that the secondary disc (12) is situated above the main disc (18) from which it is separated by means of a cross-piece (13) engaged on the same pin.

3. A tool magazine according to claim 1, characterized in that the opening (20) provided in the main disc (8) in order to receive the members (16, 17) presenting the housings (18) of the secondary disc (12) is adapted to be brought before the tool-changing station.

4. A tool magazine according to claim 1, characterized in that on the secondary disc (12) are pivotally mounted bent rods (16) which support casings (17) provided with tool housings (18), the said rods (16) being in resting contact against a circular wall (21) provided with an opening (21a) allowing the said rod (16) through when the latter is lowered, i. e. when the tool housing is in use.

5. A tool magazine according to claim 1, characterized in that the main and secondary discs are selectively driven in rotation by at least one driving member.

6. A tool magazine according to claim 1, characterized in that the vertical movement of the members (16, 17) supporting the tool housings is controlled by at least one driving member.

## Ansprüche

1. Werkzeugmagazin für eine automatische Werkzeugwechselvorrichtung, mit einer kreisförmigen Scheibe (8), die an einer Achse (7) drehbar gelagert ist und an ihrem Umfang Sitze zur Aufnahme der Werkzeuge (11) hat, die längs Radien der Scheibe angeordnet sind, dadurch gekennzeichnet, daß koaxial zur Hauptscheibe (8) wenigstens eine Nebenscheibe (12) angeordnet ist, an der längs einer zu einem Radius der Scheibe senkrechten Achse Tragorgane (16, 17) mit Nebensitzen (18) zur Aufnahme von Werkzeugen (19) angelenkt sind, wobei die mit Nebensitzen (18) versehenen Organe (16, 17) durch Schwenken selektiv in eine Öffnung (20) einsetzbar sind, die in der Wand der Hauptscheibe (8) an der Stelle eines der normalerweise an dieser Scheibe vorgesehenen Sitze ausgebildet ist.

2. Werkzeugmagazin nach Anspruch 1, dadurch gekennzeichnet, daß die Nebenscheibe (12) über der Hauptscheibe (8) angeordnet ist, von der sie durch ein auf derselben Achse aufgesetztes Abstandsrohr getrennt ist.

3. Werkzeugmagazin nach Anspruch 1, dadurch gekennzeichnet, daß die in der Hauptscheibe (8) ausgebildete Öffnung (20) zur Aufnahme der die Sitze (18) aufweisenden Organe (16, 17) der Werkzeugwechselstation dargeboten werden kann.

4. Werkzeugmagazin nach Anspruch 1, dadurch gekennzeichnet, daß an der Nebenscheibe (12) abgewinkelte Stäbe (16) angelenkt sind, die Gehäuse (17) mit Werkzeugsitzen (18) tragen, wobei die Stäbe (16) an einer kreisförmigen Wand (21) anliegen, die einen Einschnitt (21a) für den Durchtritt der Stange (16) aufweist, wenn diese in die Gebrauchsstellung des Werkzeugssitzes abgesenkt wird.

5. Werkzeugmagazin nach Anspruch 1, dadurch gekennzeichnet, daß die Hauptscheibe und die Nebenscheibe (8 und 12) durch wenigstens ein Antriebsorgan selektiv angetrieben werden.

6. Werkzeugmagazin nach Anspruch 1, dadurch gekennzeichnet, daß die senkrechte Verschiebung der Tragorgane (16, 17) für die Werkzeugsitze durch wenigstens ein Antriebsorgan gesteuert wird.

*FIG.1*

*FIG.2*

FIG.3

FIG.4